# EUROPEAN PATENT SPECIFICATION

(11) **EP 4 246 354 B1**
(45) Date of publication and mention of the grant of the patent: **26.06.2024**
(21) Application number: 23157207.4
(22) Date of filing: 17.02.2023
(51) Int. Cl.: H04W 12/47, H04W 12/77, G06F 21/60, G06F 3/12, H04L 9/40, H04W 12/062

(54) **METHOD AND SYSTEM FOR SECURE PRINTING AND FOR ASSIGNMENT OF AN RFID READER TO A NETWORK PRINTER**
VERFAHREN UND SYSTEM ZUM SICHEREN DRUCKEN UND ZUR ZUORDNUNG EINES RFID-LESEGERÄTS ZU EINEM NETZWERKDRUCKER
PROCÉDÉ ET SYSTÈME D'IMPRESSION SÉCURISÉE ET D'ATTRIBUTION D'UN LECTEUR RFID À UNE IMPRIMANTE DE RÉSEAU

(30) Priority: 18.03.2022 EP 22162963
(43) Date of publication of application: 20.09.2023
(73) Proprietor: ELATEC GmbH, 82178 Puchheim (DE)
(72) Inventor: FINKENZELLER, Klaus, 85774 Unterföhring (DE); SAMSON, Dr. Dominik, 82024 Taufkirchen (DE); KIM, Denis, 85598 Baldham (DE)
(74) Representative: Lohr, Jöstingmeier & Partner

(56) References cited:
- US-A1- 2008 130 882
- US-A1- 2018 096 155

## Description

### Field of the invention

The invention relates to a method and a system for secure printing and specifically to authentication of users for secure printing.

### Description of the related art

When someone prints a file, the document usually reaches the output tray of a printer within seconds. Therefore, when the user who submitted the print job arrives at the printer, the output waits there "unattended." If another user is at the printer at that moment, that user can view the printed document or even take it with them.

Secure (& Pickup) Printing (also known as Pull Printing or Follow Me Printing) refers to an output process by which printouts are not output directly with the printing process on the selected printer. Instead, they are held until the user identifies himself at the printer and authorizes the output. Pull printing offers many business benefits. It protects sensitive information during the printing process, reduces costs by eliminating unclaimed documents, and increases user mobility and productivity by allowing them to print anytime, anywhere.

In a more modern approach, managed print providers are moving to the "cloud" and e.g. using Microsoft Universal Print. This controls printers via the cloud and assigns a print job to the correct printer using Universal Print. Then the print job is sent to the printer, sometimes even without the connection, but the local network after a direct connection is established. The advantage of this system is that no local print server needs to be installed, and managed print solutions can be installed at any time via the cloud, for example, via the Azure Web Store, or via another cloud service such as AWS or Google.

An example of cloud-based secure printing system is disclosed in US 2018/096155 A1 (RYU DAE-GULL [KR] ET AL) 5 April 2018. In this document, when requesting printing of a desired printed matter by using a communication network of a mobile terminal of a user and a personal computer, the cloud-based secure printing system uses a print management server and a print agent to authenticate and confirm the user and document security authority, and prints the printed matter through a desired printer. The effects of strengthening the security of printed matter, increasing user convenience and work efficiency through a mobile printing function, and reducing the printing of unnecessary documents and the leaving of documents unattended and reducing costs can be obtained, and a secure print platform can be provided which is capable of printing, regardless of which printer manufacturer and model is used.

Wallet apps are apps that are used to store digital cards such as admission tickets, vouchers, customer cards, or boarding passes on the one hand, and on the other hand store means of payment such as credit cards that can be used to pay with the smartphone at the checkout in retail stores. The two best-known wallet apps are Apple Wallet and Google Pay.

Apple Wallet is Apple's native wallet solution that comes pre-installed on all iOS devices since iOS 6 (released in 2012). One can store in the app all the cards that would otherwise be found in your wallet, such as coupons, loyalty cards, tickets or boarding passes, as well as credit cards that can be used with Apple Pay. But there are a few more features that a wallet certainly can't do, such as changing the design of cards if they're already stored on your smartphone, or sending push notifications.

Google Pay is Google's wallet solution for cards and mobile payments. The features in Google Pay designed to store and manage digital cards are grouped under the name "Google Pay for passes" and received a major update in 2018, adding support for tickets and boarding passes, for example. Google Pay has been around for a few years, and the app was previously called Android Pay. Google Pay, unlike Apple Wallet, is not pre-installed on most Android devices, but it is linked directly to users' Google accounts, which simplifies the user experience - for example, cards stored on a desktop computer are automatically synchronized to users' smartphones.

Passes are a digital representation of information that might otherwise be printed on small pieces of paper or plastic. They let users take an action in the physical world. Passes can contain images and a barcode, and may be updated using push notifications. A pass library contains the user's passes, and users view and manage their passes using the Wallet app.

Classically, RFID readers for print release today are integrated into a printer or plugged into a printer via USB.

If the printer is controlled via a print server, so that only the print job belonging to the user who is currently authenticating himself at the RFID reader, gets printed out, one of the biggest problems is being able to establish a communication link between the RFID reader and the print server. According to the state of the art, this must always be supported by a corresponding firmware or firmware extension (app) of the printer, but this is not always the case. Today, it is not possible to connect any printer with an RFID reader in such a way that the reader can connect to a server via the printer and exchange data. Especially smaller and cheaper printers, as they are typically used in small offices, do not provide support for an RFID reader by a printer.

### Summary of the invention

The problem to be solved by the invention is to provide a method with which the logical assignment of a reader is simplified and largely automated. Almost any network-compatible printer should be usable for this purpose. An adaptation of the firmware in the printer shall no longer be necessary. The setup of the connection between a reader and a printer should be so simple that it can be carried out without special training and instruction.

Another problem to be solved is to provide secure printing with printers which are dynamically assigned to a specific user.

Solutions of the problems are described in the independent claims. The dependent claims relate to further improvements of the invention.

A method of secure printing (here also follow-me print) allows selection of a printer by a user at the time of printing. A print job with a user identifier is sent to a print server. The user identifier identifies the user who needs and/or is authorized to receive the prints from the print job. The user identifies with a RFID reader attached and/or assigned to a printer, by e.g. A RFID tag and/or a mobile device. The RFID reader reads a user print credential and transmits this together with its own unique reader identifier to the print server. The print server selects based on the user print credential at least one print job with a matching user identifier e.g., from a table and/or database. Finally, the print server sends the at least one selected print job to a network printer assigned to the RFID reader.

This solution is completely independent from any software and/or firmware of a printer. It does not need a printer supporting a RFID reader for authentication. An assignment between any printer and any RFID reader may be stored in a table and/or database which may be or at least accessible by the print server. Such assignments may be directly red, manually entered or configured by a method as described herein.

A method according to an embodiment ensures, that a reader, e.g., a RFID reader is uniquely assigned to a printer during a one-time setup. Herein reference is made to an RFID reader. Instead, any suitable reader may be used. Such a reader may also be a reader having a network and/or cloud connection, e.g., a LPWAN like NB-loT, LoRaWAN, Wi-Fi, WiFi HaLow or a similar technology.

The system for uniquely assigning an RFID reader to a printer may include the components described below:
A user interface, which may be run as standalone software on a computer.

A Pass Deployment Center (PDC) which may generate credentials and make them available for download.

A print server which can be operated on-premises or in a cloud.

At least one mobile device, e.g. a cell phone that is configured to read and interpret a machine-readable code, which may be a QR code or any other code, e.g. linear barcode, or clear text as used in Machine Readable Zones (MRZ) in travel documents, via a camera and which further may have an RFID/NFC interface.

At least one network printer, which may be logically linked to an RFID reader, as well as a corresponding number of RFID readers.

The RFID reader may be equipped with a network interface that may be configured to wirelessly communicate with the print server.

The system according to the invention is configured for logically linking an RFID reader with a network printer. After successful linking, a print output may be directed to the linked network printer by presenting a valid RFID badge at the reader.

To set up the system, proceed as described below. It is assumed that the printers concerned are accessible in the network and RFID readers are installed in the physical vicinity of the printer. The RFID readers are connected to the Internet via WLAN, NB-loT, LoRaWAN network, THREAD Mesh network, WiFi HaLow or another medium. The steps described are initiated by a user or system administrator, who is referred to below as the key user.
a) assigning a unique printer identifier to a printer. Optional start of a software with a user interface on a computer system or a mobile device, which shows to the key user at least one of or all printers available in the system. And selecting by the key user at least one of the printers to be linked with an RFID reader. Then a unique printer identifier is assigned to the at least one selected printer.
b) forwarding by the computer system of a unique printer identifier for each printer to a pass deployment center and to a print configuration server. The configuration server may be part of a print server.
c) generating a confirmation credential, which may also contain a unique printer identifier for each printer, by the pass deployment center. Further generating a unique link to the confirmation credential which may be a URL for retrieval of the confirmation credential e.g., by a terminal device or user device (e.g., cell phone, a tablet). This unique link may be transferred back to the computer system.
d) generating a machine-readable code (MRC), e.g., a barcode or a QR code from the unique link and making the MRC visible at the printer, either by printing out the MRC or by displaying the MRC at the printers display of the respective assigned printer. Controlling the printer directly or indirectly via a print server to produce the printout. The machine-readable code may be generated by the configuration server and sent to the printer. Alternatively, the unique link may be sent to the printer, the printer generating the machine-readable code.
e) scanning by a camera of a mobile device or another online device, the machine-readable code, decoding the MRC and transferring the unique link to the mobile device.
f) opening the link by the mobile device and downloading the confirmation credential from the pass deployment center to the mobile device as a wallet pass so that it can be read via NFC.
g) contactless reading the credential from the mobile devices NFC-Interface by a RFID reader which may later be linked to the printer.
h) transmitting by the RFID reader the credential, together with its own unique ID, to the configuration server. Further, a unique reader identifier of the RFID reader may be transferred.
i) establishing an assignment between a specific printer and a specific reader from the unique printer identifier and the unique ID of the reader sent along.

Normally, the payload for NFC messages is limited, e.g., to 64 Bytes. This may be too little to store additional information, such as a (direct) URL to a print server. For this reason, a possible extension of the method is to provide an additional configuration server, which may be (initially) addressed by all readers under a known, pre-programmed URL. After transmission of the credential, which may be part of a unique token the configuration server may determine the correct print server. The token, or the configuration, may then be forwarded to the intended print server by the configuration server.

In an embodiment, an index (a few bits or bytes) may be sent to a list of URLs of known print servers in the (64-byte) payload, which may be stored in the reader as a table.

In an embodiment, an additional configuration server may be used. This server may forward information received from a RFID reader to a dedicated print server. The configuration server takes over the task of a router, which generates the complete unique link (URL) of the print server from a print server ID stored in the credential (e.g. from a database). This may be used if the storage capacity of the credential is not sufficient to transmit all information for the configuration in full length.

This forwarding process may also be performed for future print releases. However, it is equally possible for the configuration server to provide the valid URL to the reader for further use.

In an embodiment, the procedure above differs in step h) including:
h1) transmitting by the RFID reader the credential, together with its own unique reader identifier, to the configuration server. Further, the unique printer identifier of step b) of the printer may be transferred. Also, an identifier to which print server this information must be forwarded may be provided.
h2) the configuration server generating a complete unique link (URL) of the print server from a print server ID stored in the credential and forwarding the complete unique link to a print server.

In a further embodiment, step h) may be replaced by:
h1) transmitting by the RFID reader the credential, together with its own unique reader identifier to at least one LoRaWAN gateway,
h2) the at least one LoRaWAN gateway receiving at least the credential and forwarding it to a previously assigned LoRa network server,
h3) the LoRa network server receiving the data and forwarding the data to the print configuration server.

In another embodiment, the software with a user interface on a computer system is omitted completely. The printer is set up in such a way that it automatically logs on to a print server either during initial startup, or on request in a configuration mode. The sequence of steps a-d is modified here.
a) assigning a unique printer identifier to a printer.
b) when the printer is logging on to a configuration server, e.g., for the first time, it transmits a unique printer identifier to the configuration server. The configuration server transmits each unique printer identifier received from a printer to the pass deployment center.
c) generating by the pass deployment center a confirmation credential for each printer, which includes the unique printer identifier, and sending back a unique-download-link for each credential to the print configuration server.
d) generating a machine-readable code, e.g. a QR code from the unique link by the print configuration server and causing the machine readable code to be printed on the respective assigned printer and/or displayed on a display of the printer. This machine-readable code may also already be generated by the PDC, and then in step c) may only be forwarded by the software to the printer to be linked.
e) ... i) correspond to the first embodiment.

In an embodiment, the configuration server may be part of the print server.

Another embodiment relates to a method of printing by a network printer including the steps of:
a) sending a print job to the print server together with a user identifier,
b) reading a user print credential from a RFID device or a mobile device e.g. by NFC (Near Field Communication) or BLE (Bluetooth Low Energy) e.g. for identifying or authenticating a user at the RFID reader.
c) transmitting by the RFID reader the user print credential together with its own unique reader identifier to the print server or an assignment server,
d) selecting by the print server at least one print job based on the user print credential with at least a matching user identifier,
e) selecting by the print server a network printer based on a previously established assignment between the unique reader identifier and the network printer,
f) sending the selected print job by the print server to the selected network printer.

The user identifier may be a UUID, a username, a login name and/or any unique identifier of a user and/or user group. The user identifier may at least be unique within the network, which has access to the print server. Further information, like an ID or address of the personal computer, laptop or mobile device may be included within the user identifier.

The unique reader identifier may be a UUID or any network address, e.g. IP address, MAC address and others. It may be any identifier which is unique for a RFID reader or a group of RFID readers preferably in the network in which the RFID reader is used and/or which has access to the printers.

Matching of the user print credential with at least a matching user identifier may be based on a table and/or database providing user print credentials and user identifier. Matching may also be made if the user print credentials are the same as the user identifiers.

The assignment server which may be part of or included into the print server may hold assignment information, e.g. as a table or as a database. Such assignment information relates to the assignments of RFID readers to printers, e.g. which RFID reader is assigned to which printer. The assignment information may be directly available and/or stored at the print server. The assignment information may be collected manually and/or by the method disclosed herein. The assignment server may be the configuration server further mentioned herein.

For network printer selection, a previously established assignment between the unique reader identifier and the network printer is used. The assignment information may be directly available and/or stored at the print server. The assignment information may be collected manually and/or by the method disclosed herein. The assignment information may be held in at least one table and/or a database. The printer may be identified by a network address, e.g. IP address, MAC address or a DevEUI in a LORA network.

In an embodiment, all steps following step a) are repeated for every print job. An assignment of a printer to a RFID reader may only be made once. Such an assignment of an RFID reader to a network printer may be made according to the method as disclosed above. Any other suitable method may also be used. For example, a barcode or QR code may be printed on the RFID reader. This may be scanned together with a printed code from the printer or a printer identifier which may also be from a barcode on the printer. Botch codes may be forwarded to an authentication server or a print server.

In a further embodiment, step d) includes the following steps:
d1) transmitting by the RFID reader the user credential, together with its own unique reader identifier to at least one LoRaWAN gateway (177),
d2) the at least one LoRaWAN gateway receiving at least the user credential and forwarding it to a previously assigned LoRa network server,
d3) the LoRa network server decoding the data and forwarding the data to the print configuration server.

The embodiments described above may be operated in parallel in an installation if required. For example, an installation may operate both printers that can log on directly to the print server and printers for which configuration software must be used.

The basic concept of the invention relates to devices configured to and a method of assignment of an RFID reader to a network printer includes the steps of: transmitting a unique printer identifier to a pass deployment center and to a print server, generating a machine readable code, e.g. a QR code including a unique link to a confirmation credential, further including the unique printer identifier, and printing the machine readable QR code by the printer or displaying it on a display of the printer. Further steps include reading by a mobile device the printed and/or displayed QR code and generating a wallet pass by loading the confirmation credential via the link. Then the credential is transferred to a RFID reader, which further transmits the credential together with its own unique reader identifier to the print server, which establishes an assignment between the printer and the reader based on the unique printer identifier and the unique reader identifier.

### Description of Drawings

In the following the invention will be described by way of example, without limitation of the general inventive concept, on examples of embodiment with reference to the drawings.
Figure 1 shows a system of an embodiment, and a sequence of assigning a reader to a printer.
Figure 2 shows a system of another embodiment and a flow of assigning a reader to a printer using an additional configuration server.
Figure 3 shows the procedure for assigning a reader (6) to a printer (5), whereby the printer (5) registers itself with the print server (3) as a new subscriber, at least when it is started up for the first time.
Figure 4 shows a system of an embodiment, and a sequence of assigning a reader to a printer.
Figure 5 shows in principle the distribution and application of wallet passes according to the prior art.
Figure 6 shows secure printing via a wireless network.
Figure 7 shows secure printing via a LoRaWAN network.
Figure 8 shows secure printing to multiple printers.

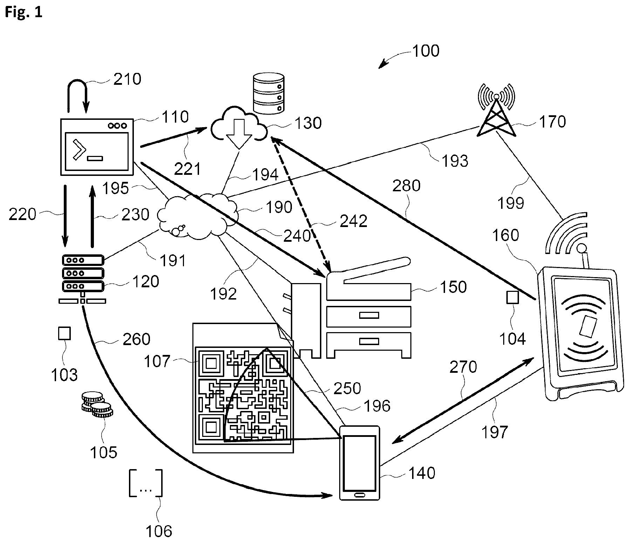

Figure 1 shows a system 100 of an embodiment and a sequence of assigning a reader 160 to a printer 150.

The system 100 for uniquely assigning an RFID reader to a printer may include the components described below:
- A user interface, which may be run as standalone software on a computer system 110, e.g., a PC, a client-side web application in a browser of an app, or in a mobile device or portable device (cell phone) or similar arrangement. The user interface may thereby be operated in a domain in which the printers to be configured are known (and can be found with a service, if necessary).

- A Pass Deployment Center (PDC) 120 which may generate credentials 105 and make them available for download.
- A print server 130 which may be operated on-premises or in a cloud.
- At least one mobile device 140 that is configured to read and interpret a machine-readable code, e.g., a QR code 107, e.g., via a camera and which further may have a shortrange communication interface, preferably a RFID/NFC interface.
- At least one network printer 150.
- At least one RFID reader 160. The at least one RFID reader 160 may be equipped with a network interface that may be configured to communicate by a wireless network 170 with the print server 130. The network may be a local network and/or a wireless network. It may include a LAN or WLAN connection, but also an NB-lot, LTE or other LPWAN connection, which may allow a connection to the Internet. In this case, the reader may be powered via the USB interface of the printer, whereby there may also be a physical connection to the printer via the USB connector. However, the reader may be supplied with power independently of the printer, merely positioning the reader spatially in the vicinity of the printer.
- A network 190, which may at least include a cloud, may be provided for communication of the components. There may be at least one of a first network connection 191 to the pass deployment center 120, a second network connection 192 to the printer 150, a third network connection 193 to the wireless network 170, a fourth network connection 194, a fifth network connection 195 to the computer system 110.

In an embodiment, an index (a few bits or bytes) may be sent to a list of URLs of known print servers in the (64-byte) payload, which may be stored in the reader as a table.

The system according to an embodiment may be configured for logically linking an RFID reader 160 with a network printer 150. After successful linking, a print output may be directed to the linked network printer by presenting a valid RFID badge at the reader.

The sequence of assigning a reader to a printer may include the following steps, which may be initiated by a user or system administrator, who is referred to below as the key user.
a) In a first step a unique printer identifier is assigned to a printer. Further, a software with a user interface on a computer system 110 may show the key user all or a selection of printers 150 available in the system 100. The key user may now select 210 printers 150 that he wants to link with an RFID reader 160. Furthermore, a selection of a printer server, in particular a print server in the cloud, may also be made.
b) The computer system 110 transmits 220 a unique printer identifier for each printer to the pass deployment center 120 and sends 221 it in parallel to the print server 130.
c) The pass deployment center 120 generates a confirmation credential 105 for each printer, which also may contain a unique printer identifier. The confirmation credential may be retrieved from a mobile device or terminal device (e.g., cell phone 140) via a unique link 106 which may be a URL. At the same time, the pass deployment center 120 sends 230 this unique link back to the software computer system 110. The mobile device 140 may have a connection 196 to the network 190 e.g., via a mobile network.
d) The computer system with software 110 and/or the pass deployment center 120 generates a machine-readable code, preferably QR code 107 from the unique link 106 and transfers 240, 241 the machine readable code 107 to be printed out on the respective assigned printer and/or being displayed on a display of the printer 150. For that, the printer 150 may be controlled directly 240 or indirectly 241 via a print server 130.
e) The key user goes on site to the printer to be linked and uses a mobile device 140 to optically read 250 or scan the machine readable code 107 that has just been printed out and/or displayed. Reading the machine readable code 107 transfers the unique link 106 to the mobile device 140.
f) In the mobile device 140, the scanned link 106 is opened and the generated confirmation credential 105 is transferred 260 from the pass deployment center 120 to the mobile device 140 as a wallet pass so that it can be read via NFC.
g) The key user holds the mobile device 140 up to the RFID reader 160 to be linked to the printer so that the credential 105 can be read 270 from the mobile device e.g. by RFID connection 197.
h) The RFID reader transmits 280 the read credential 105, together with its own unique ID, to the configuration server 180 e.g., via the wireless network 170. The data stored in the credential represents a data set stored, for example, as a CSV string or in a JSON format. This record may also contain information about the print server to be contacted, such as a URL or query string, or other data needed to handle the configuration. This enables the reader to transmit data to the print server that allows the printer to be uniquely assigned to a reader. For this purpose, the data set transmitted to the print server may contain the printer identifier unique to each printer, which has already been made known to the print server from step b).
i) The configuration server 180 is now able to establish an assignment between a specific printer and a specific reader from the unique printer identifier and the unique ID of the reader sent along.

In an embodiment, the configuration server 180 may be part of the print server 130.

In an embodiment, the printers concerned are accessible in the network and RFID readers may be installed in the physical vicinity of the printer. The RFID readers may be connected to the Internet via WLAN, NB-loT, LoRaWAN or another medium.

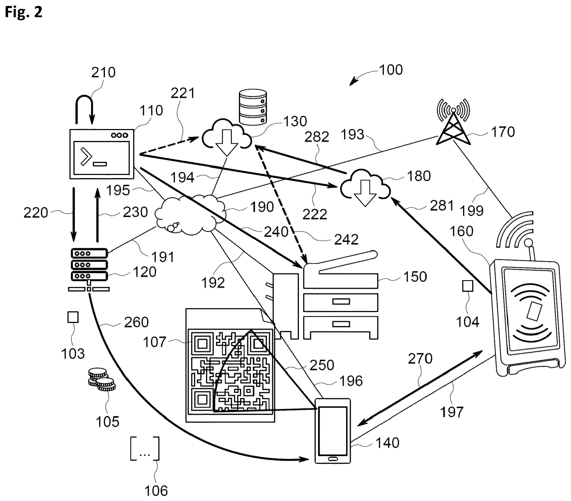

Figure 2 shows a system 100 of an embodiment and a sequence of assigning a reader 160 to a printer 150 using an additional configuration server 180.

Here, in addition to the previous embodiment, an additional configuration server 180 is provided.

Normally, the payload for NFC messages is limited. Apple only allows 64 bytes at the time of this disclosure. This may be too little to store additional information, such as a (direct) URL to a print server. For this reason, a possible extension of the method is to provide an additional configuration server 180, which may be (initially) addressed by all readers under a known, pre-programmed URL. After transmission 281 of a unique token, the configuration server may determine the correct print server. The token, or the configuration, may then be forwarded to the intended print server by the configuration server.

In particular, the configuration server 180 server may forward 282 information received from a RFID reader 160 to a dedicated print server 130. The configuration server 180 takes over the task of a router, which generates the complete unique link 106 (URL) of the print server from a print server ID stored in the credential 105 (e.g., from a database). This may be used if the storage capacity of the credential is not sufficient to transmit all information for the configuration in full length.

The procedure shown in Figure 2 differs from the procedure described above in the following aspects:
b1) The computer system 110 may transmit 220 a unique printer identifier for each printer to the pass deployment center 120 and may send 222 it in parallel to the configuration server 180.
h1) The RFID reader transmits 281 the read credential, together with its own unique reader ID, to the configuration server 180 via a network 170. For this purpose, the data set transmitted to the configuration server 180 also contains the unique printer identifier for each printer, which has already been made known to the print server from step b), and an identifier to which print server this information may be forwarded.
h2) The configuration server transmits 282 data which may include a complete unique link (URL) of the print server to the print server which enables a unique assignment of the printer 150 to a reader 160.

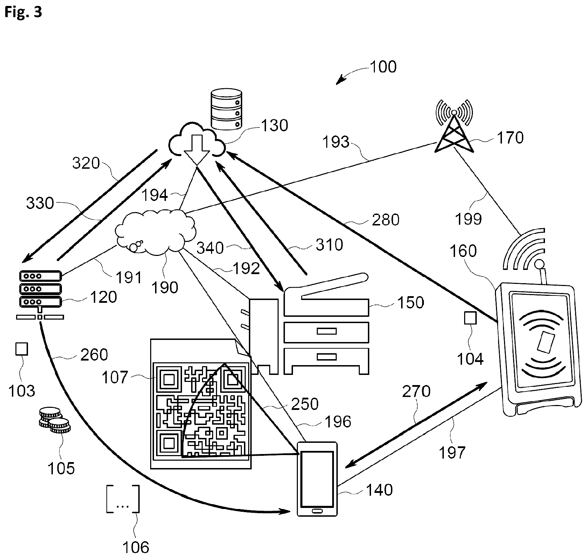

Figure 3 shows a procedure for assigning a reader 160 to a printer 150, whereby the printer 150 registers itself with the print server 130 as a new subscriber, at least when it is started up for the first time.

In this embodiment, the software with a user interface on a computer system 110 is omitted completely. The printer 150 is set up in such a way that it automatically logs on to a print server 130 either during initial startup, or on request in a configuration mode. The sequence of steps a-d is modified here.
a) In a first step, the printer 150 logs on to a print server 130 for the first time and transmits 310 a unique printer identifier to the print server.
b) The print server 130 transmits 320 each unique printer identifier received to the pass deployment center 120 (PDC).
c) The PDC generates an acknowledgement credential 105 for each printer, which also contains the unique printer identifier. The confirmation credential can be retrieved from a mobile device or terminal device (e.g., cell phone) via a unique link (URL). The PDC sends 330 this unique link 106 back to the print server 130.
d) The print server 130 generates a machine-readable code 107 from the unique link 106 and causes the machine-readable code 107 to be printed 340 and/or displayed on the respective assigned printer 150. This machine-readable code 107 may also be generated by the PDC, and then in step d) is only forwarded by the software to the printer to be linked.
e) ... h) correspond to the sequence in Figure 1

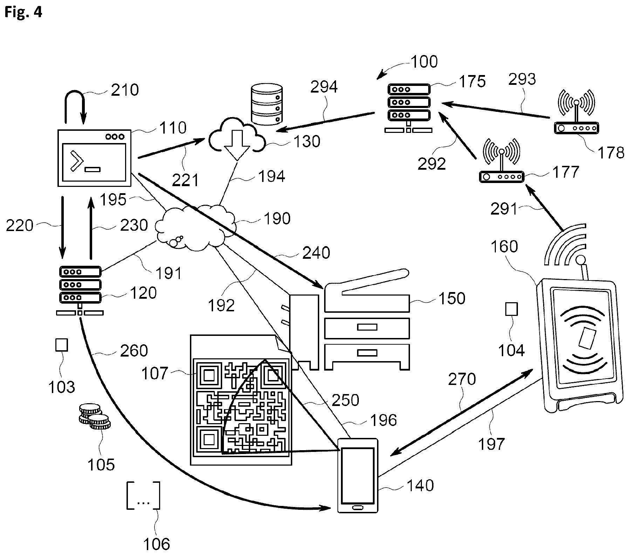

Figure 4 shows a system 100 of an embodiment and a sequence of assigning a reader 160 to a printer 150 using LoRaWAN (Long Range Wide Area Network).

Here, in addition to the previous embodiment, a LoRa network server (LNS) 175 and at least one gateway 177, 178 in vicinity of at least one of the readers 160, is provided.

While LPWAN (Low Power Wide Area Network) technologies normally provide a continuous IP-connection between a client and a base station, LoRaWAN does not use a controlled connection. The RFID-reader 160 in this embodiment may be configurated as a LoRaWAN node. After having read a RFID tag, the reader may send an encrypted message that is received by at least one LoRa gateway 177, 178 remote of the reader. The received message is forwarded to the related LNS 175, where it will be decrypted. The LoRa Message may contain a unique reader identifier 104. The unique reader identifier 104 may also be or include at least one of a 64-bit unique DevEUI, an end-device identifier which uniquely identifies the reader, and a 64-bit AppEUI, an application identifier which uniquely identifies the application, and a variable number of application-data. The application data may include data, read via RFID from a RFID token.

The procedure shown in Figure 4 differs from the procedure described for figure 1 in step h) which is replaced by three sub steps:
h1) The RFID reader transmits 291 via LoRa at least a unique reader identifier 104 which may be part of a packet of application data, containing data previously red by the RFID interface from a transponder or mobile phone.
h2) The transmitted at least a unique reader identifier 104, received by at least one LoRaWAN gateway 177, 178 is forwarded 292 to an assigned LNS 175.
h3) The LNS 175 decodes the received data, and based on an ID, e.g., the DevEUI, AppEUI or another ID, received from the RFID reader, forwards 294 the data to a print server 130.

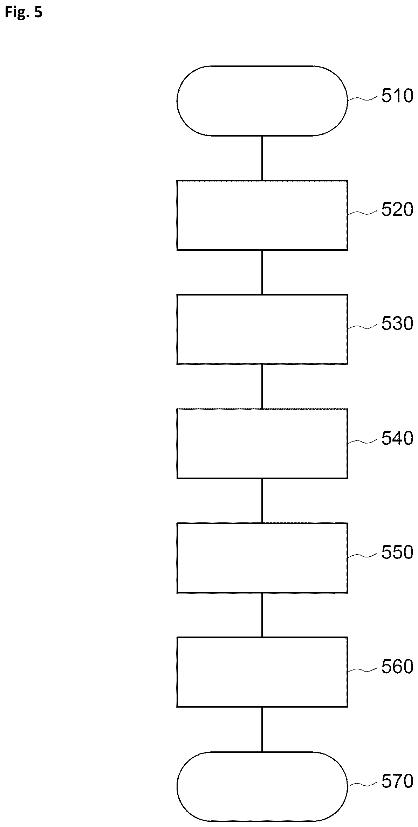

Figure 5 shows in principle the distribution and application of wallet passes according to the prior art. The method starts with terminator 510 and ends at terminator 570. In step 520, passes are distributed by an app, via E-mail or on the web. As a next step 530 a user may add a pass to a wallet on a mobile device.

Based on location and time such passes may automatically appear in step 540 on a mobile device. In step 550 a user may hold a mobile device near an NFC reader or the barcode of the pass may be scanned. In step 560, the pass is used to check in to an event, redeem rewards or coupons, and more.

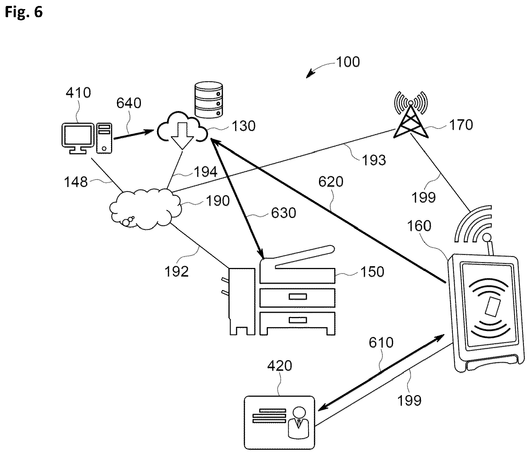

Figure 6 shows secure printing via a wireless network. This may be done by the following steps:
a) A print job is sent 640 from a computer which may be a personal computer, a laptop or any mobile device, to the print server 130 together with a user identifier. The print job may be routed via a computer network connection 148 through a network 190 by a print server network connection 194 to a print server 130. The user identifier may be a UUID, a user name, a login name and/or any unique identifier of a user and/or user group. The user identifier may at least be unique within the network, which has access to the print server 130. Further information, like an ID or address of the personal computer, laptop or mobile device may be included within the user identifier.
b) The RFID reader reads 610 the user print credential from a RFID device e.g. by RFID connection 199,
c) The RFID reader transmits 620 the user print credential, together with its own unique ID, to the print server 130 or an assignment server, e.g., via the wireless network 170 by network connections 199, 193 and via a network 190. The assignment server which may be part of or included into the print server may hold assignment information, e.g. as a table or as a database. Such assignment information relates to the assignments of RFID readers to printers, e.g. which RFID reader is assigned to which printer. The assignment information may be directly available and/or stored at the print server. The assignment information may be collected manually and/or by the method disclosed herein. The assignment server may be the configuration server 180 further mentioned herein.
d) The print server 130 selects at least one print job based on the user print credential with a matching user identifier. Matching of the user print credential with at least a matching user identifier may be based on a table and/or database providing user print credentials and user identifier. Matching may also be made if the user print credentials are the same as the user identifiers.
e) The print server 130 selects a network printer based on a previously established assignment between the unique reader identifier and the network printer. The assignment information may be directly available and/or stored at the print server. The assignment information may be collected manually and/or by the method disclosed herein. The assignment information may be held in at least one table and/or a database. The printer may be identified by a network address, e.g., IP address, MAC address or a DevEUI in a LORA network.
f) The print server 130 sends 630 the at least one selected print job to the selected network printer, e.g. by network connections 194, 192 via the network 190.

Instead of a wireless network, a wired network may be used.

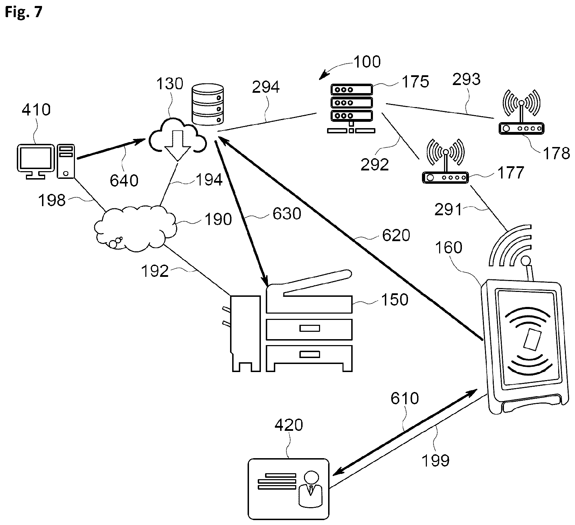

Figure 7 shows secure printing via a LoRaWAN network. This is similar to the secure printing by via a wireless network, but transmission 620 of print credentials is made by an encrypted message that is received by at least one LoRa gateway 177, 178 remote of the reader. The received message is forwarded to the related LoRa network server 175, where it will be decrypted.

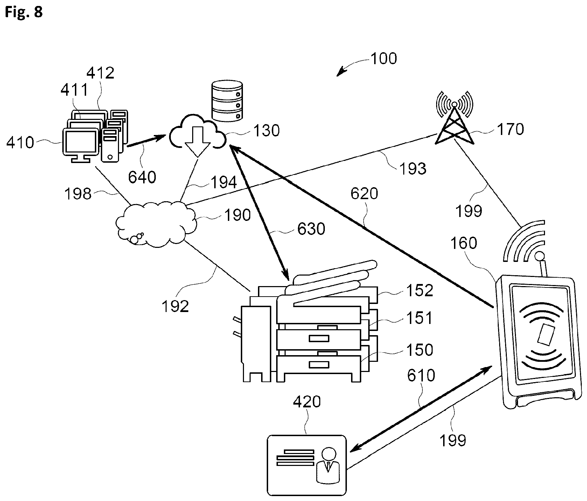

Figure 8 shows secure printing to multiple printers. Here, multiple printers 150, 151, 152 may be addressed by multiple computers 410, 411, 412. Each of the printers 150, 151, 152 may have assigned an individual RFID reader 160.

### List of reference numerals

- 100: system
- 103: unique printer identifier
- 104: unique reader identifier
- 105: credential
- 106: unique link (URL)
- 107: machine readable code
- 110: computer system with user interface software
- 120: pass deployment center (PDC)
- 130: print server
- 140: mobile device
- 148: computer network connection
- 150: printer
- 160: RFID reader
- 170: wireless network
- 175: LoRa network server (LNS)
- 177, 178: LoRa gateway
- 180: configuration server
- 190: network
- 191 - 196: physical network connections
- 197, 199: RFID reading connection
- 210: selection of printers to be linked with an RFID reader
- 220: transfer of a unique printer identifier to the pass deployment center
- 221: transfer of a unique printer identifier to the print server
- 230: transfer of the unique link to the computer system
- 240: direct control of printer
- 241: indirect control of printer via print server
- 250: reading the machine readable code
- 260: transfer of credential from the PDC to the mobile device
- 270: transfer of credential from the mobile device to a RFID reader
- 280: transmit credential from the RFID reader to the print server
- 281: transmit credential from the RFID reader to the configuration server
- 282: forward information from a configuration server to a print server
- 291: transmit credential from the RFID reader to a LoRa Gateway
- 292: transmit credential from a LoRa Gateway to a LoRa network server
- 293: transmit credential from a LoRa Gateway to a LoRa network server
- 294: transmit credential from the LoRa network server to a print server
- 310: printer transmits unique printer identifier to print server
- 320: print server transmits unique printer identifiers to the PDC
- 330: PDC sends unique link to print server
- 340: machine readable code sent from print server to printer
- 410: computer
- 510: Method start
- 520: Step of pass distribution
- 530: Step of user adding pass to wallet
- 540: Step of passes appearing automatically on user's device
- 550: Step of user holding device to NFC reader
- 560: Step of checking in by pass
- 570: Method end
- 610: RFID reader reads RFID device
- 620: transmit print credentials by reader to print server
- 630: transmit print job by print server to printer
- 640: send print job from computer to print server

## Claims

1. A method of secure printing **characterized by** the steps of:
a) sending a print job to a print server (130) together with a user identifier,
b) An RFID reader (160) reading a user print credential from an RFID device (420) or mobile device,
c) transmitting by the RFID reader (160) the user print credential together with its own unique reader identifier to the print server (130) or an assignment server,
d) selecting by the print server (130) at least one print job based on the user print credential with at least one matching user identifier,
e) selecting by the print server a network printer based on a previously established assignment between the unique reader identifier and the network printer,
f) sending the selected print job by the print server to the selected network printer.

2. The method according to claim 1,
**characterized in, that**
the user identifier is at least one of UUID, a user name, a login name, and any unique identifier of a user and/or user group and/or
the user print credential is at least one of UUID, a user name, a login name, and any unique identifier of a user and/or user group, and/or
the unique reader identifier is at least one of a UUID, a network address, an IP address, a MAC address, and a DevEUI in a LORA network.

3. The method according to any of the previous claims,
**characterized in, that**
step d) of selecting by the print server (130) at least one print job is made by using at least one table and/or database holding user print credentials and user identifiers.

4. The method according to any of the previous claims,
**characterized in, that**
in step e) the selection of a printer is made by using at least one table and/or database holding information relating to the assignments of RFID readers to printers.

5. A method of assignment of an RFID reader (160) to a network printer (150) **characterized by** the steps of:
a) assigning a unique printer identifier (103) to a printer (150),
b) transmitting the unique printer identifier (103) to a pass deployment center (120) and to a configuration server (180),
c) generating a confirmation credential (105), including the unique printer identifier (103) for the printer (150) by the pass deployment center (120) together with a unique link (106) to the confirmation credential (105),
d) generating a machine-readable code (107) from the unique link (106) and printing and/or displaying the machine readable code (107) by the printer (150),
e) reading the machine readable code (107) by a mobile device (140) using its camera and transferring the unique link (106) to the mobile device (140),
f) opening the unique link (106) by the mobile device (140) and transferring the credential (105) to the mobile device (140) as a wallet pass so that it can be read via NFC,
g) reading the credential (105) from the mobile device (140) by an RFID reader (160) which is to be linked to the printer (150),
h) transmitting (280) by the RFID reader (160) the credential (105), together with its own unique reader identifier (104) to the configuration server (180), and
i) establishing an assignment between the printer (150) and the reader (160) based on the unique printer identifier (103) and the unique reader identifier (104).

6. The method according to claim 5,
**characterized in, that**
the configuration server (180) is part of a print server (130).

7. The method according to claim 5 or 6, including the following step before step a):
a computer system 110 showing at least a selection of printers 150 and request a key user to select at least one of the selection of printers.

8. The method according to any of the previous claims, wherein step b) to d) further include:
b) the printer (150) transmitting a unique printer identifier (103) to a configuration server (180) and the configuration server (180) transmitting the unique printer identifier (103) to a pass deployment center (120),
c) generating a confirmation credential (105), including the unique printer identifier (103) for the printer (150) by the pass deployment center (120) together with a unique link (106) to the confirmation credential (105) and sending the link to the configuration server (180),
d) generating a machine-readable code (107) from the unique link (106) by the configuration server (180) and printing and/or displaying the machine readable code (107) by the printer (150).

9. The method according to any of the previous claims, wherein step h) includes the following steps:
h1) transmitting (291) by the RFID reader (160) the credential (105), together with its own unique reader identifier (104) to at least one LoRaWAN gateway (177),
h2) the at least one LoRaWAN gateway (177) receiving at least the credential (105) and forwarding (292) it to a previously assigned LoRa network server (175),
h3) the LoRa network server (175) receiving the data and forwarding (294) the data to the print configuration server (130).

10. The method according to any of the previous claims, wherein step d) includes:
generating the machine-readable code (107) by the configuration server (180) and sending the machine-readable code (107) to the printer (150), or sending the unique link (106) to the printer (150) and generating the machine readable code (107) by the printer (150).

11. The method according to any of the previous claims, wherein step i) includes:
establishing the assignment between the printer (150) and the reader (160) by the configuration server (180) and/or by the print server (130).

12. A method of printing by a network printer (150) including the steps of:
a) assigning of an RFID reader (160) to a network printer (150) according to any of the previous claims,
b) sending a print job to the print server (130) together with a user credential,
c) authenticating at the RFID reader (160) by reading the user credential (105) from a mobile device (140),
d) transmitting by the RFID reader (160) the user credential together with its own unique reader identifier (104) to an authentication server,
e) forwarding the unique reader identifier (104) to the print server (130), after verification of the user credential by the authentication server,
f) sending the print job by the print server (130) to the network printer (150) based on the established assignment of step a).

13. The method of the previous claim, wherein all steps following step a) are repeated for every print job.

14. The method of any of the two previous claims, wherein the authentication server is part of the print server (130) and/or part of the configuration server (180).

15. The method according to any of the previous claims, wherein step d) includes the following steps:
d1) transmitting (291) by the RFID reader (160) the user credential, together with its own unique reader identifier (104) to at least one LoRaWAN gateway (177),
d2) the at least one LoRaWAN gateway (177) receiving at least the user credential and forwarding (292) it to a previously assigned LoRa network server (175),
d3) the LoRa network server (175) receiving the data and forwarding (294) the data to the print configuration server (130).

## Patentansprüche

1. Ein Verfahren zum sicheren Drucken, **gekennzeichnet durch** die folgenden Schritte
a) Senden eines Druckauftrags an einen Druckserver (130) zusammen mit einer Nutzerkennung,
b) ein RFID-Lesegerät (160) liest eine Nutzer-Druckzugangsberechtigung von einem RFID-Gerät (420) oder einem mobilen Gerät,
c) Übertragen der Nutzer-Druckzugangsberechtigung durch das RFID-Lesegerät (160) zusammen mit seiner eigenen eindeutigen Lesegerätkennung an den Druckserver (130) oder einen Zuweisungsserver,
d) Auswählen mindestens eines Druckauftrags durch den Druckserver (130), basierend auf der Nutzer-Druckzugangsberechtigung mit mindestens einer übereinstimmenden Nutzerkennung,
e) Auswählen eines Netzwerkdruckers durch den Druckserver, basierend auf einer zuvor erstellten Zuweisung zwischen der eindeutigen Lesegerätkennung und dem Netzwerkdrucker,
f) Senden des ausgewählten Druckauftrags durch den Druckserver an den ausgewählten Netzwerkdrucker.

2. Das Verfahren gemäß Anspruch 1,
**dadurch gekennzeichnet, dass**
die Nutzerkennung mindestens eines ist von einer UUID, einem Nutzernamen, einem Login-Namen, und jeder beliebigen eindeutigen Kennung eines Nutzers und/oder einer Nutzergruppe und/oder
die Druckzugangsberechtigung mindestens eines ist von einer UUID, einem Nutzernamen, einem Login-Namen, und jeder beliebigen eindeutigen Kennung eines Nutzers und/oder einer Nutzergruppe, und/oder
die eindeutige Lesegerätkennung mindestens eines ist von einer UUID, einer Netzwerkadresse, einer IP-Adresse, einer MAC-Adresse und einer DevEUI in einem LORA-Netzwerk.

3. Das Verfahren gemäß irgendeinem der vorhergehenden Ansprüche,
**dadurch gekennzeichnet, dass**
Schritt d) des Auswählens von mindestens einem Druckauftrag durch den Druckserver (130) unter Verwendung von mindestens einer Tabelle und/oder Datenbank erfolgt, die Druck-Zugangsberechtigungen und Nutzerkennungen enthält.

4. Das Verfahren gemäß irgendeinem der vorhergehenden Ansprüche,
**dadurch gekennzeichnet, dass**
in Schritt e) die Auswahl eines Druckers unter Verwendung von mindestens einer Tabelle und/oder Datenbank erfolgt, die Informationen bezüglich der Zuweisungen von RFID-Lesegeräten zu Druckern enthält.

5. Ein Verfahren zum Zuweisen eines RFID-Lesegeräts (160) zu einem Netzwerkdrucker (150), **gekennzeichnet durch** die folgenden Schritte:
a) Zuweisen einer eindeutigen Druckerkennung (103) zu einem Drucker (150),
b) Übertragen der eindeutigen Druckerkennung (103) an ein Passverteilungszentrum (120) und an einen Konfigurationsserver (180),
c) Erzeugen einer Zugangsberechtigungsbestätigung (105), aufweisend die eindeutige Druckerkennung (103) für den Drucker (150), durch das Passverteilungszentrum (120) zusammen mit einem eindeutigen Link (106) zur Zugangsberechtigungsbestätigung (105),
d) Erzeugen eines maschinenlesbaren Codes (107) aus dem eindeutigen Link (106) und Drucken und/oder Anzeigen des maschinenlesbaren Codes (107) durch den Drucker (150),
e) Lesen des maschinenlesbaren Codes (107) durch ein mobiles Gerät (140) unter Verwendung seiner Kamera und Übertragen des eindeutigen Links (106) auf das mobile Gerät (140),
f) Öffnen des eindeutigen Links (106) durch das mobile Gerät (140) und Übertragen der Zugangsberechtigung (105) auf das mobile Gerät (140) als Wallet-Pass, so dass dieser über NFC gelesen werden kann,
g) Lesen der Zugangsberechtigung (105) vom mobilen Gerät (140), das mit dem Drucker (150) verbunden werden soll, durch ein RFID-Lesegerät (160),
h) Übertragen (280) der Zugangsberechtigung (105) durch das RFID-Lesegerät (160) zusammen mit seiner eigenen eindeutigen Lesegerätkennung (104) an den Konfigurationsserver (180), und
i) Erstellen einer Zuweisung zwischen dem Drucker (150) und dem Lesegerät (160) basierend auf der eindeutigen Druckerkennung (103) und der eindeutigen Lesegerätkennung (104).

6. Das Verfahren gemäß Anspruch 5,
**dadurch gekennzeichnet, dass**
der Konfigurationsserver (180) Teil eines Druckservers (130) ist.

7. Das Verfahren gemäß Anspruch 5 oder 6, aufweisend den folgenden Schritt vor Schritt a):
ein Computersystem 110 zeigt mindestens eine Auswahl von Druckern 150 an und fordert einen Hauptnutzer auf, mindestens einen aus der Auswahl von Druckern auszuwählen.

8. Das Verfahren gemäß einem der vorhergehenden Ansprüche, wobei die Schritte b) bis d) weiterhin aufweisen:
b) der Drucker (150) überträgt eine eindeutige Druckerkennung (103) an einen Konfigurationsserver (180) und der Konfigurationsserver (180) überträgt die eindeutige Druckerkennung (103) an ein Passverteilungszentrum (120),
c) durch das Passverteilungszentrum (120) Erzeugen einer Zugangsberechtigungsbestätigung (105), welche die eindeutige Druckerkennung (103) für den Drucker (150) enthält, zusammen mit einem eindeutigen Link (106) zur Zugangsberechtigungsbestätigung (105) und Senden des Links an den Konfigurationsserver (180),
d) Erzeugen eines maschinenlesbaren Codes (107) aus dem eindeutigen Link (106) durch den Konfigurationsserver (180) und Drucken und/oder Anzeigen des maschinenlesbaren Codes (107) durch den Drucker (150).

9. Das Verfahren gemäß irgendeinem der vorhergehenden Ansprüche, wobei Schritt h) die folgenden Schritte aufweist:
h1) Übertragen (291) der Zugangsberechtigung (105) durch das RFID-Lesegerät (160) zusammen mit seiner eigenen eindeutigen Lesegerätkennung (104) an mindestens ein LoRaWAN-Gateway (177),
h2) das mindestens eine LoRaWAN-Gateway (177) empfängt mindestens die Zugangsberechtigung (105) und leitet sie weiter (292) an einen zuvor zugewiesenen LoRa-Netzwerkserver (175),
h3) der LoRa-Netzwerkserver (175) empfängt die Daten und leitet sie weiter (294) an den Druckkonfigurationsserver (130).

10. Das Verfahren gemäß irgendeinem der vorhergehenden Ansprüche, wobei Schritt d) aufweist:
Erzeugen des maschinenlesbaren Codes (107) durch den Konfigurationsserver (180) und Senden des maschinenlesbaren Codes (107) an den Drucker (150), oder Senden des eindeutigen Links (106) an den Drucker (150) und Erzeugen des maschinenlesbaren Codes (107) durch den Drucker (150).

11. Das Verfahren gemäß irgendeinem der vorhergehenden Ansprüche, wobei Schritt i) aufweist:
Erstellen der Zuweisung zwischen dem Drucker (150) und dem Lesegerät (160) durch den Konfigurationsserver (180) und/oder durch den Druckserver (130).

12. Ein Verfahren zum Drucken durch einen Netzwerkdrucker (150), welches die folgenden Schritte aufweist:
a) Zuweisen eines RFID-Lesegeräts (160) an einen Netzwerkdrucker (150) gemäß irgendeinem der vorhergehenden Ansprüche,
b) Senden eines Druckauftrags an den Druckserver (130) zusammen mit einer Zugangsberechtigung,
c) Authentifizieren am RFID-Lesegerät (160) durch Lesen der Nutzer-Zugangsberechtigung (105) von einem mobilen Gerät (140),
d) Übertragen der Nutzer-Zugangsberechtigung durch das RFID-Lesegerät (160) zusammen mit seiner eigenen eindeutigen Lesegerätkennung (104) an einen Authentifizierungsserver,
e) Weiterleiten der eindeutigen Lesegerätkennung (104) an den Druckserver (130), nach Verifizierung der Nutzer-Zugangsberechtigung durch den Authentifizierungsserver,
f) Senden des Druckauftrags durch den Druckserver (130) an den Netzwerkdrucker (150) basierend auf der erstellten Zuweisung aus Schritt a).

13. Das Verfahren gemäß dem vorhergehenden Anspruch, wobei alle auf Schritt a) folgenden Schritte für jeden Druckauftrag wiederholt werden.

14. Das Verfahren gemäß irgendeinem der beiden vorhergehenden Ansprüche, wobei der Authentifizierungsserver Teil des Druckservers (130) und/oder Teil des Konfigurationsservers (180) ist.

15. Das Verfahren gemäß irgendeinem der vorhergehenden Ansprüche, wobei Schritt d) die folgenden Schritte umfasst:
d1) Übertragen (291) der Nutzer-Zugangsberechtigung durch das RFID-Lesegerät (160), zusammen mit seiner eigenen eindeutigen Lesegerätkennung (104) an mindestens ein LoRaWAN-Gateway (177),
d2) das mindestens eine LoRaWAN-Gateway (177) empfängt mindestens die Nutzer-Zugangsberechtigung und leitet sie weiter (292) an einen zuvor zugewiesenen LoRa-Netzwerkserver (175),
d3) der LoRa-Netzwerkserver (175) empfängt die Daten und leitet die Daten weiter (294) an den Druckkonfigurationsserver (130).

## Revendications

1. Procédé d'impression sécurisée, **caractérisé par** les étapes de :
a) envoi d'un travail d'impression à un serveur d'impression (130) conjointement avec un identifiant d'utilisateur,
b) un lecteur RFID (160) lisant un justificatif d'identité d'impression d'utilisateur à partir d'un dispositif RFID (420) ou d'un dispositif mobile,
c) transmission par le lecteur RFID (160) du justificatif d'identité d'impression d'utilisateur conjointement avec son identifiant unique de lecteur au serveur d'impression (130) ou à un serveur d'affectation,
d) sélection par le serveur d'impression (130) d'au moins un travail d'impression sur la base du justificatif d'identité d'impression d'utilisateur avec au moins un identifiant d'utilisateur correspondant,
e) sélection par le serveur d'impression d'une imprimante réseau sur la base d'une affectation préalablement établie entre l'identifiant unique de lecteur et l'imprimante réseau,
f) envoi du travail d'impression sélectionné par le serveur d'impression à l'imprimante réseau sélectionnée.

2. Procédé selon la revendication 1,
**caractérisé en ce que**
l'identifiant d'utilisateur est au moins un parmi un UUID, un nom utilisateur, un nom de connexion, et tout identifiant unique d'un utilisateur et/ou d'un groupe d'utilisateurs, et/ou
le justificatif d'identité d'impression d'utilisateur est au moins un parmi un UUID, un nom utilisateur, un nom de connexion, et tout identifiant unique d'un utilisateur et/ou d'un groupe d'utilisateurs, et/ou
l'identifiant unique de lecteur est au moins un parmi un UUID, une adresse de réseau, une adresse IP, une adresse MAC, et un DevEUI dans un réseau LORA.

3. Procédé selon l'une quelconque des revendications précédentes,
**caractérisé en ce que**
l'étape d) de sélection par le serveur d'impression (130) d'au moins un travail d'impression est réalisée à l'aide d'au moins une table et/ou base de données détenant des justificatifs d'identité d'impression d'utilisateur et des identifiants d'utilisateur.

4. Procédé selon l'une quelconque des revendications précédentes,
**caractérisé en ce que**
à l'étape e), la sélection d'une imprimante est réalisée à l'aide d'au moins une table et/ou base de données détenant des informations concernant les affectations de lecteurs RFID aux imprimantes.

5. Procédé d'affectation d'un lecteur RFID (160) à une imprimante réseau (150) **caractérisé par** les étapes de :
a) affectation d'un identifiant unique d'imprimante (103) à une imprimante (150),
b) transmission de l'identifiant unique d'imprimante (103) à un centre de déploiement de passe (120) et à un serveur de configuration (180),
c) génération d'un justificatif d'identité de confirmation (105), incluant l'identifiant unique d'imprimante (103) pour l'imprimante (150) par le centre de déploiement de passe (120) conjointement avec un lien unique (106) vers le justificatif d'identité de confirmation (105),
d) génération d'un code lisible par machine (107) à partir du lien unique (106) et impression et/ou affichage du code lisible par machine (107) par l'imprimante (150),
e) lecture du code lisible par machine (107) par un dispositif mobile (140) à l'aide de sa caméra et transfert du lien unique (106) au dispositif mobile (140),
f) ouverture du lien unique (106) par le dispositif mobile (140) et transfert du justificatif d'identité (105) au dispositif mobile (140) sous la forme d'un passe de portefeuille de sorte qu'il puisse être lu via une CCP (communication en champ proche),
g) lecture du justificatif d'identité (105) à partir du dispositif mobile (140) par un lecteur RFID (160) qui doit être relié à l'imprimante (150),
h) transmission (280) par le lecteur RFID (160) du justificatif d'identité (105), conjointement avec son propre identifiant unique de lecteur (104), au serveur de configuration (180), et
i) établissement d'une affectation entre l'imprimante (150) et le lecteur (160) sur la base de l'identifiant unique d'imprimante (103) et de l'identifiant unique de lecteur (104).

6. Procédé selon la revendication 5,
**caractérisé en ce que**
le serveur de configuration (180) fait partie d'un serveur d'impression (130).

7. Procédé selon la revendication 5 ou 6, incluant l'étape suivante avant l'étape a) :
un système informatique 110 montrant au moins une sélection d'imprimantes 150 et demande à un utilisateur clé de sélectionner au moins une de la sélection d'imprimantes.

8. Procédé selon l'une quelconque des revendications précédentes, dans lequel les étapes b) à d) incluent en outre :
b) l'imprimante (150) transmettant un identifiant unique d'imprimante (103) à un serveur de configuration (180) et le serveur de configuration (180) transmettant l'identifiant unique d'imprimante (103) à un centre de déploiement de passe (120),
c) la génération d'un justificatif d'identité de confirmation (105), incluant l'identifiant unique d'imprimante (103) pour l'imprimante (150) par le centre de déploiement de passe (120) conjointement avec un lien unique (106) vers le justificatif d'identité de confirmation (105) et l'envoi du lien au serveur de configuration (180),
d) la génération d'un code lisible par machine (107) à partir du lien unique (106) par le serveur de configuration (180) et l'impression et/ou l'affichage du code lisible par machine (107) par l'imprimante (150).

9. Procédé selon l'une quelconque des revendications précédentes, dans lequel l'étape h) inclut les étapes suivantes :
h1) la transmission (291) par le lecteur RFID (160) du justificatif d'identité (105), conjointement avec son propre identifiant unique de lecteur (104), à au moins une passerelle LoRaWAN (177),
h2) l'au moins une passerelle LoRaWAN (177) recevant au moins le justificatif d'identité (105) et le transférant (292) à un serveur de réseau LoRa (175) préalablement affecté,
h3) le serveur de réseau LoRa (175) recevant les données et transférant (294) les données au serveur de configuration d'impression (130).

10. Procédé selon l'une quelconque des revendications précédentes, dans lequel l'étape d) inclut :
la génération du code lisible par machine (107) par le serveur de configuration (180) et l'envoi du code lisible par machine (107) à l'imprimante (150), ou l'envoi du lien unique (106) à l'imprimante (150) et la génération du code lisible par machine (107) par l'imprimante (150).

11. Procédé selon l'une quelconque des revendications précédentes, dans lequel l'étape i) inclut :
l'établissement de l'affectation entre l'imprimante (150) et le lecteur (160) par le serveur de configuration (180) et/ou par le serveur d'impression (130).

12. Procédé d'impression par une imprimante réseau (150) incluant les étapes de :
a) affectation d'un lecteur RFID (160) à une imprimante réseau (150) selon l'une quelconque des revendications précédentes,
b) envoi d'un travail d'impression au serveur d'impression (130) conjointement avec un justificatif d'identité d'utilisateur,
c) authentification au niveau du lecteur RFID (160) par lecture du justificatif d'identité d'utilisateur (105) à partir d'un dispositif mobile (140),
d) transmission par le lecteur RFID (160) du justificatif d'identité d'utilisateur conjointement avec son propre identifiant unique de lecteur (104) à un serveur d'authentification,
e) transfert de l'identifiant unique de lecteur (104) au serveur d'impression (130), après vérification du justificatif d'identité d'utilisateur par le serveur d'authentification,
f) envoi du travail d'impression par le serveur d'impression (130) à l'imprimante réseau (150) sur la base de l'affectation établie à l'étape a).

13. Procédé selon la revendication précédente, dans lequel toutes les étapes après l'étape a) sont répétées pour chaque travail d'impression.

14. Procédé selon l'une quelconque des deux revendications précédentes, dans lequel le serveur d'authentification fait partie du serveur d'impression (130) et/ou fait partie du serveur de configuration (180).

15. Procédé selon l'une quelconque des revendications précédentes, dans lequel l'étape d) inclut les étapes suivantes :
d1) la transmission (291) par le lecteur RFID (160) du justificatif d'identité d'utilisateur, conjointement avec son propre identifiant unique de lecteur (104), à au moins une passerelle LoRaWAN (177),
d2) l'au moins une passerelle LoRaWAN (177) recevant au moins le justificatif d'identité d'utilisateur et le transférant (292) à un serveur de réseau LoRa (175) préalablement affecté,
d3) le serveur de réseau LoRa (175) recevant les données et transférant (294) les données au serveur de configuration d'impression (130).
